# EUROPÄISCHE PATENTANMELDUNG

(11) **EP 4 194 721 A1**
(43) Veröffentlichungstag der Anmeldung: **14.06.2023**
(21) Anmeldenummer: 21213161.9
(22) Anmeldetag: 08.12.2021
(51) Int. Cl.: F16J 15/3228, F16C 41/00, H02K 11/40

(54) **ANORDNUNG ZUR ERDUNG EINES MASCHINENELEMENTS**

(71) Anmelder: Carl Freudenberg KG, 69469 Weinheim (DE)
(72) Erfinder: KLIX, Stefan, 69151 Neckargemünd (DE); WEIL, Johannes, 69121 Heidelberg (DE); KLIX, Stefan, 64678 Lindenfels (DE); KLIX, Stefan, 68305 Mannheim (DE); BANTZ, Marlene, 67483 Edesheim (DE); COLINEAU, François, 69469 Weinheim (DE); STOLL, Christian, 68199 Mannheim (DE)

(57) **Zusammenfassung**

Anordnung, umfassend einen Träger (1) aus einem zähharten Werkstoff und einen kreisringförmigen Erdungsring (2) aus einem elektrisch leitfähigen Werkstoff, der an dem Träger (1) festgelegt ist und mit diesem eine vormontierte Einheit (3) bildet. Die Einheit (3) ist als Gehäuseverschlussdeckel (4) mit einem scheibenförmigen Boden (5) ausgebildet.

## Beschreibung

Die Erfindung betrifft eine Anordnung, umfassend einen Träger aus einem zähharten Werkstoff und einen kreisringförmigen Erdungsring aus einem elektrisch leitfähigen Werkstoff, der an dem Träger festgelegt ist und mit diesem eine vormontierte Einheit bildet.

### Stand der Technik

Ein Erdungsring und eine Anordnung, die einen solchen Erdungsring umfasst, sind aus der DE 10 2018 105 376 A1 bekannt.

Der Erdungsring ist als Vorschaltdichtung für einen Dichtring ausgebildet und besteht aus einem elektrisch leitfähigen Werkstoff, der während seiner bestimmungsgemäßen Verwendung die Oberfläche eines zu erdenden ersten Maschinenelements anliegend berührt. Ein zweites Maschinenelement, das ebenso wie das erste Maschinenelementen aus einem elektrisch leitfähigen Werkstoff besteht und das konzentrisch zu dem ersten Maschinenelement angeordnet ist, ist auf ein definiertes Massepotential geerdet, wobei das erste und das zweite Maschinenelement durch den Erdungsring elektrisch leitend verbunden sind.

Aus der DE 10 2013 000 982 A1 ist eine Dichtung bekannt, die einen Dichtring mit zumindest einer dynamisch beanspruchten Dichtlippe und eine als Erdungsring ausgebildete Vorschaltdichtung umfasst. Die Vorschaltdichtung ist mit axialem Abstand benachbart zur Dichtlippe angeordnet und besteht aus einem elektrisch leitfähigen Werkstoff. Die Dichtlippe und die Vorschaltdichtung umschließen eine abzudichtende Oberfläche eines abzudichtenden ersten Maschinenelements dichtend, wobei das erste Maschinenelement mit radialem Abstand benachbart zu einem zweiten Maschinenelement angeordnet ist. In dem durch den radialen Abstand gebildeten Spalt sind der Dichtring und die Vorschaltdichtung angeordnet. Das zweite Maschinenelement ist auf ein definiertes Massepotential geerdet, wobei das erste und das zweite Maschinenelement von der Vorschaltdichtung jeweils anliegend berührt und dadurch elektrisch leitend miteinander verbunden sind.

Die Vorschaltdichtung ist als Potentialausgleichsring ausgebildet und besteht zum Beispiel aus einem elektrisch leitfähigen, mit PTFE imprägnierten Vliesstoff. Eine mechanische Beschädigung der Maschinenelemente durch einen elektrischen Spannungsdurchschlag ist folglich ausgeschlossen.

Ohne den elektrischen Potentialausgleich könnten mechanische Beschädigungen der gegeneinander abzudichtenden Maschinenelemente dadurch entstehen, dass unterschiedlich große elektrische Potentiale der Maschinenelemente durch einen elektrischen Spannungsdurchschlag ausgeglichen werden. Ein solcher Spannungsdurchschlag ist umso wahrscheinlicher, je enger die Maschinenelemente mit unterschiedlichen elektrischen Potentialen einander benachbart zugeordnet sind. Ein Spannungsdurchschlag kann einen Materialabtrag an dem Maschinenelement mit geringerer Ladung bewirken und eine Veränderung des Materialgefüges in dem Bereich, in dem der Spannungsdurchschlag erfolgt.

Aus der DE 10 2020 104 957 A1 ist eine Erdung für ein Getriebe bekannt, umfassend eine Getriebewelle, ein Getriebegehäuse, zumindest ein Lager, zumindest eine Labyrinth-Dichtung mit mehreren Dichtspalten an der Getriebewelle und zumindest ein Erdungskontaktelement, das so angeordnet ist, dass das Getriebegehäuse und die Getriebewelle elektrisch leitend miteinander verbunden sind, wobei das Erdungskontaktelement in die Labyrinth-Dichtung integriert ist.

Das Erdungskontaktelement ist durch eine solche Anordnung vor Umgebungseinflüssen wie Wasser oder Staub und auch vor Öl aus dem Getriebeinnenraum geschützt und außerdem wird der ohnehin in der Labyrinth-Dichtung vorhandene Platz für das Erdungskontaktelement genutzt.

Die Labyrinth-Dichtung umfasst einen Labyrinth-Deckel, der über eine Verschraubung am Getriebegehäuse befestigt ist.

### Darstellung der Erfindung

Der Erfindung liegt die Aufgabe zu Grunde, eine Anordnung der eingangs genannten Art derart weiterzuentwickeln, dass diese einen teilearmen und einfachen Aufbau aufweist, kostengünstig herstellbar ist und sich einfach montieren oder demontieren lässt.

Diese Aufgabe wird erfindungsgemäß durch die Merkmale von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die Einheit als Gehäuseverschlussdeckel mit einem scheibenförmigen Boden ausgebildet ist. Eine solche Anordnung kann immer dann zur Anwendung gelangen, wenn ein zu erdendes Maschinenelement, zum Beispiel eine Welle, als Stummel ausgebildet ist und ein Gehäuse, das das Maschinenelement umschließt, nicht durchdringt.

Hierbei ist von Vorteil, dass die vormontierte Einheit den Gehäuseverschlussdeckel bildet. Eines separat erzeugten Gehäuseverschlussdeckels, der mit der Einheit verbunden werden müsste, bedarf es daher nicht.

Der Gehäuseverschlussdeckel lässt sich auch von weniger geübten Monteuren problemlos montieren/demontieren.

Ein bedarfsweiser Austausch des Gehäuseverschlussdeckels, der aus der vormontierten Einheit besteht, lässt sich sehr einfach vornehmen. Die vormontierte Einheit wird als Ganzes zunächst demontiert und anschließend durch eine neue, baugleiche vormontierte Einheit einfach ersetzt.

Die gestellte Aufgabe ist folglich gelöst.

Der kreisringförmige Erdungsring ist durch seine Integration in die vormontierte Einheit als Bestandteil des Gehäuseverschlussdeckels ausgezeichnet vor unerwünschten Umwelteinflüssen, wie zum Beispiel Feuchtigkeit oder Staub geschützt. Der Erdungsring ist durch den scheibenförmigen Boden praktisch zur Umgebung hin gekapselt im Gehäuseverschlussdeckel angeordnet und weist dadurch gleichbleibend gute Gebrauchseigenschaften während einer langen Gebrauchsdauer auf.

Der Träger und der Erdungsring können stoff-, kraft- und/oder formschlüssig miteinander verbunden sein.

Eine stoffschlüssige Verbindung kann durch Kleben oder Anvulkanisieren erfolgen. Eine solche Verbindung ist auch während einer langen Gebrauchsdauer der Anordnung besonders haltbar.

Bei einer kraft- und/oder formschlüssigen Verbindung ist von Vorteil, dass der Erdungsring und der Träger im Anschluss an ihre bestimmungsgemäße Verwendung besonders einfach voneinander trennbar und anschließend sortenrein recyclebar sind.

Der Träger selbst kann eine statische Dichtung bilden oder eine statische Dichtung aus einem gummielastischen Werkstoff umfassen. Im erstgenannten Fall ist die Herstellung des Gehäuseverschlussdeckels besonders einfach, weil eine zusätzliche statische Dichtung aus einem gummielastischen Werkstoff nicht hergestellt und der Einheit hinzugefügt werden muss.

Gelangt demgegenüber eine statische Dichtung aus einem gummielastischen Werkstoff zur Anwendung, ist diese zum Beispiel durch Vulkanisation mit dem Träger verbunden. Hierbei ist von Vorteil, dass der Träger und die statische Dichtung jeweils funktionstechnisch individualisiert sind. Der Träger besteht aus einem besonders geeigneten Werkstoff und ist derart ausgeführt, dass er seine eigentliche Aufgabe, nämlich die Aufnahme des Erdungsrings, besonders gut löst. Rücksicht auf die Lösung weiterer Aufgaben, beispielsweise eine statische Abdichtung der Einheit in einem Gehäuse, braucht nicht genommen zu werden. Die statische Dichtung wird hinsichtlich ihres Werkstoffs und ihrer Ausgestaltung ebenfalls an ihre eigentliche Aufgabe, eine gute Abdichtung zwischen Gehäuseverschlussdeckel und Gehäuse, angepasst. Zum Beispiel eine Trägerfunktion für einen Erdungsring, braucht konstruktiv nicht berücksichtigt zu werden.

Außerdem umfasst die Anordnung ein geerdetes Gehäuse mit einer Gehäuseöffnung, die mittels des Gehäuseverschlussdeckels dichtend verschlossen ist, wobei der Erdungsring und das Gehäuse elektrisch leitend verbunden sind. Die elektrisch leitende Verbindung zwischen dem Erdungsring und dem Gehäuse kann unmittelbar oder mittelbar über den mit dem Erdungsring verbundenen Träger erfolgen, je nach Anwendungsfall.

Das Gehäuse kann eine zu erdende Welle außenumfangsseitig mit radialem Abstand umschließen, wobei in dem durch den Abstand gebildeten Spalt der

Erdungsring angeordnet ist, der die Oberfläche der zu erdenden Welle anliegend umschließt.

Durch die Anordnung werden eine elektrisch leitfähige Verbindung und damit ein elektrischer Potenzialausgleich zwischen den gegeneinander abzudichtenden Maschinenelementen, hier der zu erdenden Welle und dem geerdeten Gehäuse, erreicht. Die Welle endet mit einem Wellenstummel axial benachbart zum Gehäuseverschlussdeckel, wobei der Wellenstummel zum Beispiel durch ein Wälzlager innerhalb des Gehäuses gelagert.

Die Anordnung bewirkt einen kontrollierten elektrischen Potenzialausgleich zwischen Welle und Gehäuse. Eine mechanische Beschädigung der Maschinenelemente durch eine elektrostatische Aufladung eines der Maschinenelemente und ein anschließender Spannungsdurchschlag zum anderen Maschinenelement mit einem anderen elektrischen Potential sind folglich ausgeschlossen.

Der Erdungsring kann aus einem elektrisch leitfähigen Vliesstoff bestehen. Ein solcher Erdungsring weist nur eine sehr geringe Radialkraft auf, mit der der Erdungsring die gegeneinander abzudichtenden Maschinenelemente anliegend berührt. Reibung, Verschleiß und Verlustleistung sind dadurch auf ein Minimum reduziert. Ein luftdurchlässiger Vliesstoff hat außerdem den Vorteil, dass ein Druckausgleich axial beiderseits des Erdungsrings erfolgen kann, so dass der Potenzialausgleich auch dann zuverlässig funktioniert, wenn sich während der bestimmungsgemäßen Verwendung auf einer axialen Seite des Erdungsrings ein relativer Überdruck oder ein relativer Unterdruck aufbaut. Durch die Luftdurchlässigkeit wird axial beiderseits ein Druckausgleich bewirkt.

Anstelle des elektrisch leitfähigen Vliesstoffs kann der Erdungsring aus elektrisch leitfähigen polymeren oder elastomeren Werkstoffen bestehen.

Bedarfsweise kann der Träger aus einem polymeren Werkstoff bestehen.

In Abhängigkeit vom Anwendungsfall kann der Träger elektrisch leitfähig sein. Der Potenzialausgleich würde dann von der Welle über den Erdungsring und den Träger auf das geerdete Gehäuse erfolgen.

Nach einer anderen Ausgestaltung kann es vorgesehen sein, dass der Träger aus einem metallischen Werkstoff besteht. Träger aus einem metallischen Werkstoff sind besonders kostengünstig herstellbar. Bedarfsweise kann der metallische Träger direkt zum Potentialausgleich genutzt werden.

### Kurzbeschreibung der Zeichnung

Sieben Ausführungsbeispiele der erfindungsgemäßen Anordnung werden nachfolgend anhand der Figuren 1 bis 7 näher erläutert.

Diese zeigen jeweils in schematischer Darstellung:
- Figur 1: ein erstes Ausführungsbeispiel einer Anordnung, bei der ein erstes Ausführungsbeispiel der vormontierten Einheit zur Anwendung gelangt,
- Figur 2: ein zweites Ausführungsbeispiel einer Anordnung, bei der ein zweites Ausführungsbeispiel der vormontierten Einheit zur Anwendung gelangt,
- Figur 3: ein drittes Ausführungsbeispiel einer Anordnung, bei der ein drittes Ausführungsbeispiel der vormontierten Einheit zur Anwendung gelangt,
- Figur 4: ein viertes Ausführungsbeispiel einer Anordnung, bei der ein viertes Ausführungsbeispiel der vormontierten Einheit zur Anwendung gelangt,
- Figur 5: ein fünftes Ausführungsbeispiel einer Anordnung, bei der ein fünftes Ausführungsbeispiel der vormontierten Einheit zur Anwendung gelangt,
- Figur 6: ein sechstes Ausführungsbeispiel einer Anordnung, bei der ein sechstes Ausführungsbeispiel der vormontierten Einheit zur Anwendung gelangt und
- Figur 7: ein siebtes Ausführungsbeispiel einer Anordnung, bei der ein siebtes Ausführungsbeispiel der vormontierten Einheit zur Anwendung gelangt.

### Ausführung der Erfindung

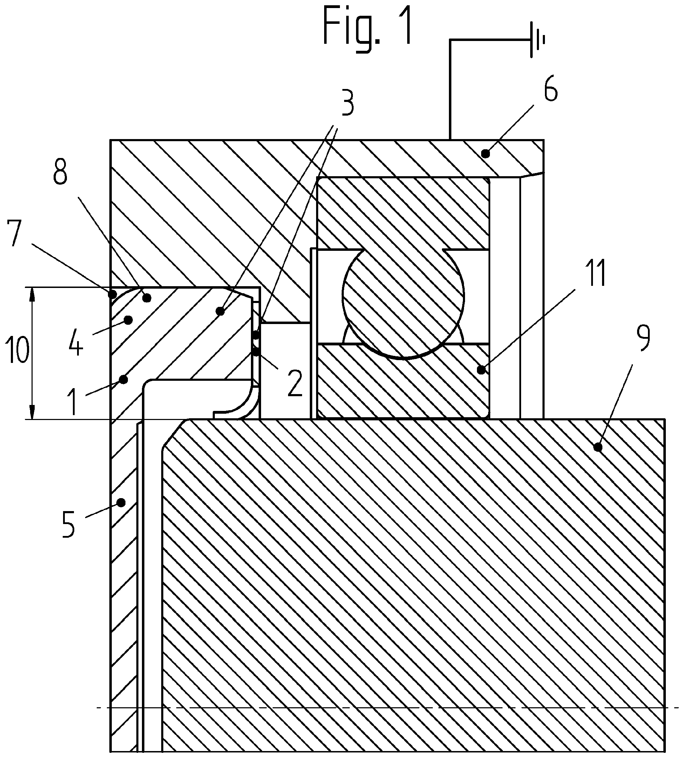

In den Figuren 1 bis 7 ist jeweils eine Anordnung gezeigt, in denen im Wesentlichen nur die jeweiligen vormontierten Einheiten 3 voneinander abweichen.

Jede Anordnung gemäß Figuren 1 bis 7 umfasst einen Träger 1 aus einem zähharten Werkstoff und einen kreisringförmigen Erdungsring 2 aus einem elektrisch leitfähigen Werkstoff, der an dem Träger 1 festgelegt ist und mit diesem die vormontierte Einheit 3 bildet. Die Einheit 3 ist als Gehäuseverschlussdeckel 4 mit einem scheibenförmigen Boden 5 ausgebildet.

Der Gehäuseverschlussdeckel 4 verschließt die Gehäuseöffnung 7 des Gehäuses 6 dichtend. Dadurch sind die Einheit 3, insbesondere der bezogen auf den Träger 1 empfindlichere Erdungsring 2 und das Innere des Gehäuses 6 vor unerwünschten äußeren Einflüssen schützt.

Das Gehäuse 6 ist geerdet und weist die Gehäuseöffnung 7 auf, die mittels des Gehäuseverschlussdeckels 4 dichtend verschlossen ist. Der Träger 1 kann einstückig und materialeinheitlich ausgebildet sein und selbst die statische Dichtung 8 bilden. Oder der Träger 1 kann zusätzlich eine statische Dichtung 8 umfassen. Der Erdungsring 2 und das Gehäuse 6 sind durch die elektrisch leitfähige Einheit 3 elektrisch leitend miteinander verbunden.

Innerhalb des Gehäuses 6 ist die zu erdende Welle 9 angeordnet. Die Welle 9 ist durch das Wälzlager 11, das innerhalb des Gehäuses 6 aufgenommen ist, gelagert.

Das Gehäuse 6 umschließt die Welle 9 mit radialem Abstand 10 außenumfangsseitig. In dem durch den radialen Abstand 10 gebildeten Spalt ist die vormontierte Einheit 3, bestehend aus dem Erdungsring 2 und dem Träger 1, angeordnet, wobei ein möglicher Potenzialausgleich von der Welle 9 durch den Erdungsring 2 der vormontierten Einheit 3 auf das Gehäuse 6 erfolgt.

Der Gehäuseverschlussdeckel 4 mit seinem scheibenförmigen Boden 5 kann zur Abdichtung einer Gehäuseöffnung 7 immer dann zur Anwendung gelangen, wenn das zu erdende Maschinenelement, zum Beispiel die Welle 9, das Gehäuse 6 nicht durchdringt. Die Welle 9 endet im Gehäuse 6 mit einem Wellenstummel, der im Wälzlager 11 gelagert ist.

In Figur 1 ist der Gehäuseverschlussdeckel 4 besonders einfach gestaltet. Der Träger 1 selbst bildet die statische Dichtung 8. Die Gehäuseöffnung 7 ist unmittelbar durch den Träger 1 des Gehäuseverschlussdeckels 4 abgedichtet. Der kreisringförmige Erdungsring 2 ist an seinem vom Träger 1 abgewandten freien Ende in axialer Richtung vorgewölbt und berührt die Oberfläche der Welle 9 umfangsseitig anliegend.

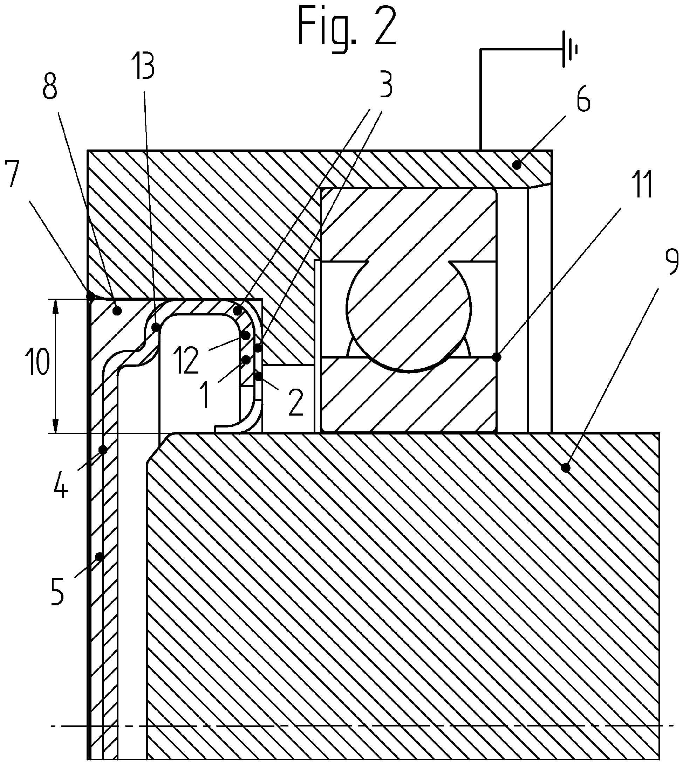

In Figur 2 ist ein Gehäuseverschlussdeckel 4 gezeigt, der einen Flansch 12 aufweist, mit dem er im Gehäuse 6 festgelegt ist. Der Träger 1 weist mehrerer axiale Absätze 13 auf. Am Träger 1 ist die statische Dichtung 8 angeordnet, die aus einem gummielastischen Dichtungswerkstoff besteht. Der Erdungsring 2 ist an einem Radialschenkel 14 des Flanschs 12 festgelegt.

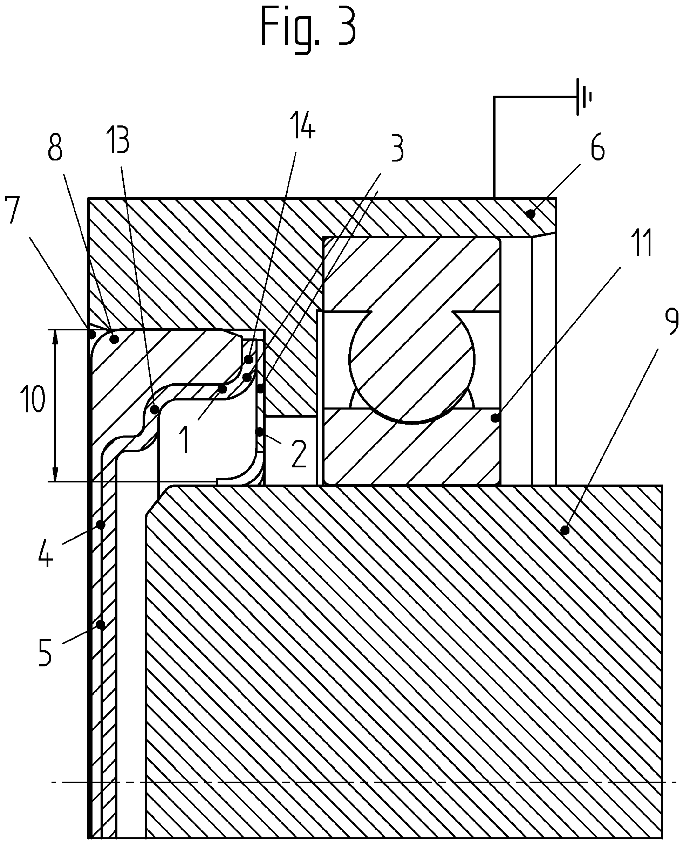

Das Ausführungsbeispiel gemäß Figur 3 unterscheidet sich vom Ausführungsbeispiel gemäß Figur 2 durch einen abweichend gestalteten Flansch 12.

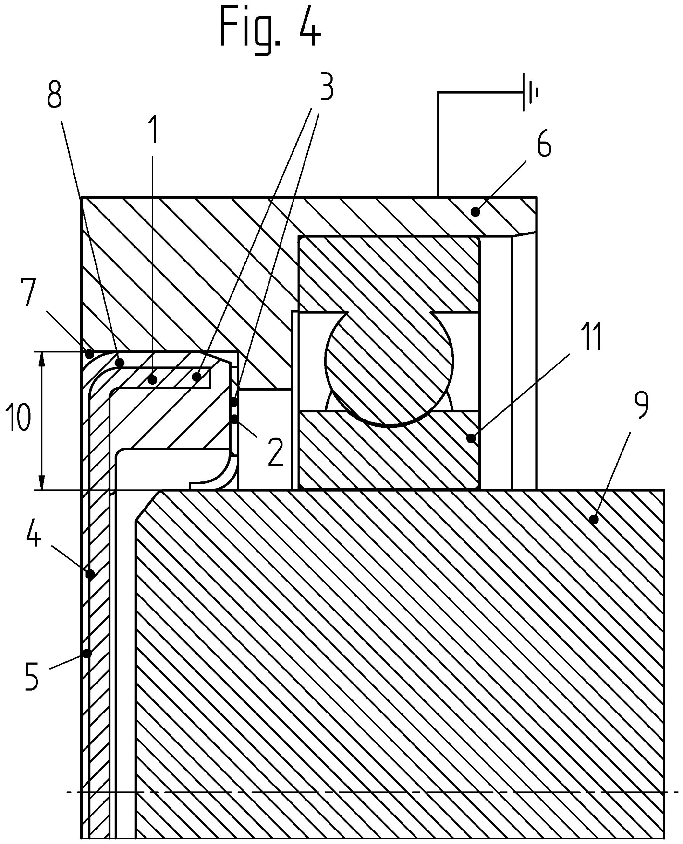

Das Ausführungsbeispiel gemäß Figur 4 unterscheidet sich vom Ausführungsbeispiel gemäß Figur 1 dadurch, dass der Träger 1 einen metallischen Stützkörper umfasst, der außenumfangsseitig von polymerem Werkstoff umschlossen ist. Der Erdungsring 2 ist ebenso, wie im Ausführungsbeispiel aus Figur 1, stirnseitig am Träger 1 angeordnet.

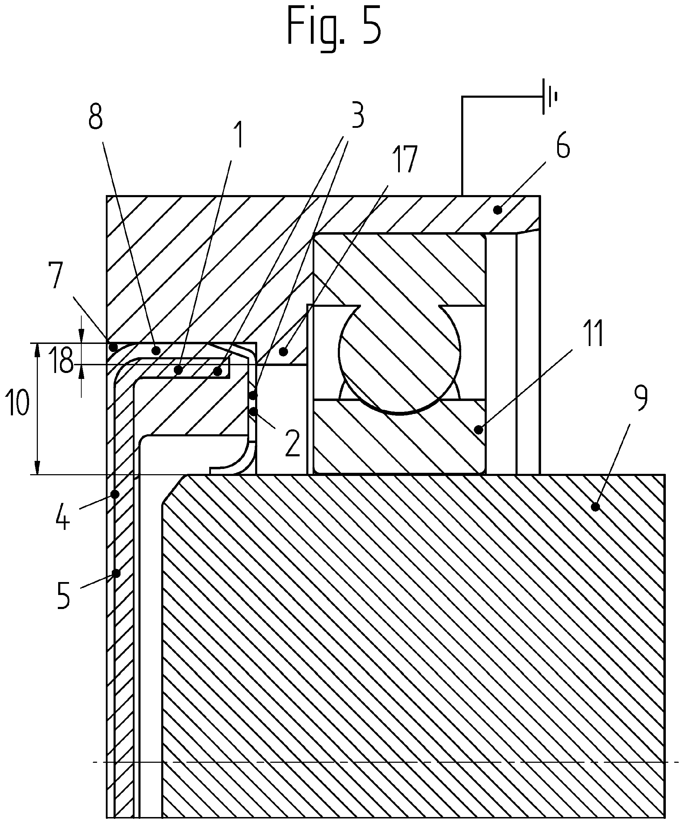

Im Ausführungsbeispiel aus Figur 5 ist der Erdungsring 2 nicht nur in radialer Richtung am Flansch 12 festgelegt, wie in den Figuren 1 und 4, sondern außerdem radial außenumfangsseitig in axialer Richtung umlenkend.

Dadurch ist eine elektrische Leitfähigkeit von der Welle 9 zum Gehäuse 6 durch den Erdungsring 2 auch dann gegeben, wenn die Schulter 17 eine sehr kleine radiale Erstreckung 18 aufweist oder ganz fehlt.

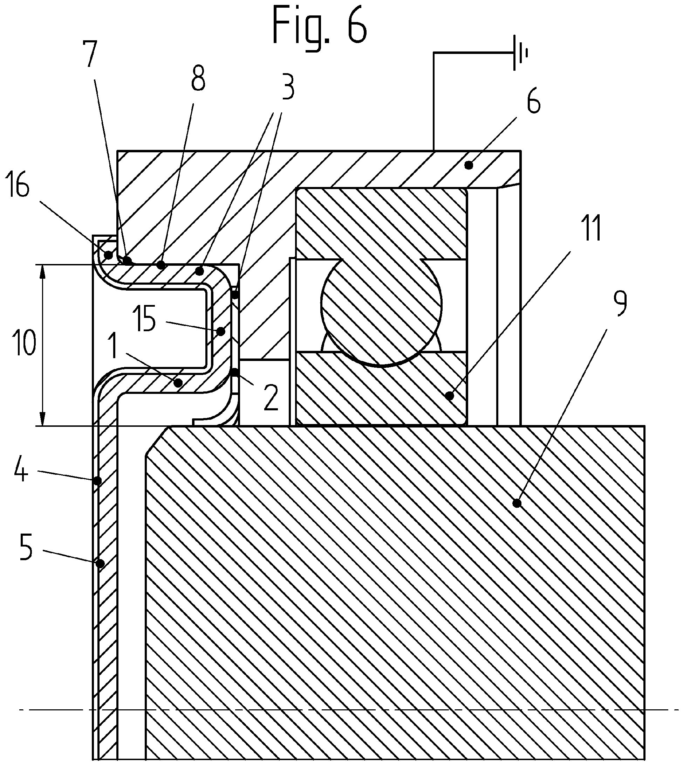

In Figur 6 ist ein sechstes Ausführungsbeispiel gezeigt, das einen schlangenförmigen Träger 1 umfasst. Dadurch ist ein Axialanschlag gebildet, mit dem der Gehäuseverschlussdeckel 4 am Gehäuse 6 anliegt und der als Positionierungs- und Montagehilfe vorgesehen ist. Der Gehäuseverschlussdeckel 4 und damit der Erdungsring 2 sind immer exakt zum Gehäuse 6 und der Welle 9 positioniert.

Der Erdungsring 2 ist auf dem radialen Bereich 15 angebracht.

Die statische Dichtung 8 kann hier beispielsweise ein polymeres Dichtmittel, zum Beispiel ein Dichtlack, sein.

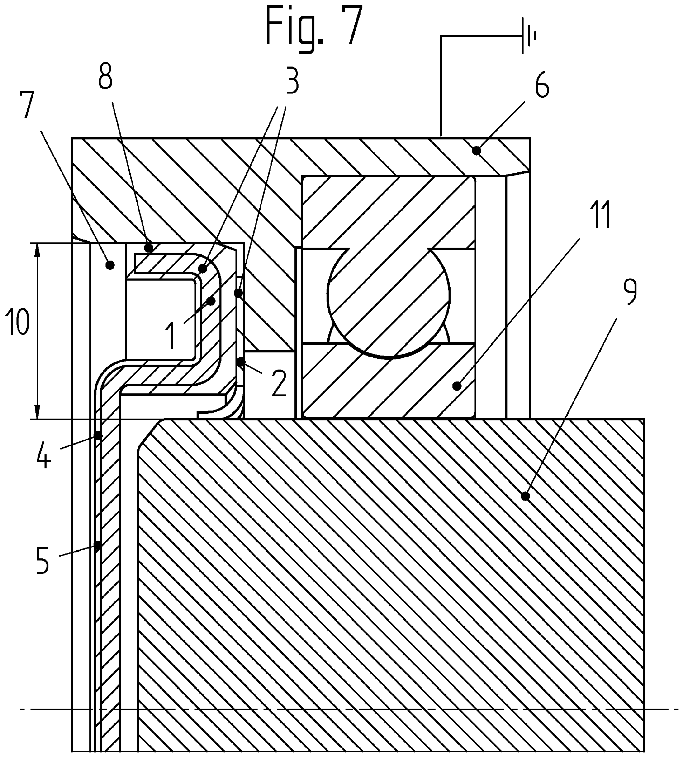

In Figur 7 ist eine Anordnung gezeigt, ähnlich der Anordnung aus Figur 6.

Der Gehäuseverschlussdeckel 4 ist in axialer Richtung versenkt in der Gehäuseöffnung 7 angeordnet.

Ebenso wie in den Figuren 1 bis 5 erstreckt sich der Boden 5 des Gehäuseverschlussdeckel 4 im Wesentlichen in einer Radialebene mit der Stirnseite des Gehäuses 6.

## Patentansprüche

1. Anordnung, umfassend einen Träger (1) aus einem zähharten Werkstoff und einen kreisringförmigen Erdungsring (2) aus einem elektrisch leitfähigen Werkstoff, der an dem Träger (1) festgelegt ist und mit diesem eine vormontierte Einheit (3) bildet, **dadurch gekennzeichnet, dass** die Einheit (3) als Gehäuseverschlussdeckel (4) mit einem scheibenförmigen Boden (5) ausgebildet ist.

2. Anordnung nach Anspruch 1, **dadurch gekennzeichnet, dass** der Träger (1) und der Erdungsring (2) stoff-, kraft- und/oder formschlüssig miteinander verbunden sind.

3. Anordnung nach einem der Ansprüche 1 oder 2, **dadurch gekennzeichnet, dass** der Träger (1) selbst eine statische Dichtung (8) bildet oder eine statische Dichtung (8) aus einem gummielastischen Werkstoff umfasst.

4. Anordnung nach einem der Ansprüche 1 bis 3, **dadurch gekennzeichnet, dass** außerdem ein geerdetes Gehäuse (6) mit einer Gehäuseöffnung (7) umfasst ist, die mittels des Gehäuseverschlussdeckels (4) dichtend verschlossen ist und dass der Erdungsring (2) und das Gehäuse (6) elektrisch leitend verbunden sind.

5. Anordnung nach Anspruch 4, **dadurch gekennzeichnet, dass** das Gehäuse (6) eine zu erdende Welle (9) außenumfangsseitig mit radialem Abstand (10) umschließt und dass in dem durch den Abstand (10) gebildeten Spalt der Erdungsring (2) angeordnet ist, der die Oberfläche der Welle (9) anliegend umschließt.

6. Anordnung nach einem der Ansprüche 1 bis 5, **dadurch gekennzeichnet, dass** der Erdungsring (2) aus einem elektrisch leitfähigen Vliesstoff besteht.

7. Anordnung nach einem der Ansprüche 1 bis 6, **dadurch gekennzeichnet, dass** der Träger (1) aus einem polymeren Werkstoff besteht.

8. Anordnung nach Anspruch 7, **dadurch gekennzeichnet, dass** der Träger (1) elektrisch leitfähig ist

9. Anordnung nach einem der Ansprüche 1 bis 6, **dadurch gekennzeichnet, dass** der Träger (1) aus einem metallischen Werkstoff besteht.
